# FASCICULE DE BREVET EUROPEEN

(11) **EP 0 522 917 B1**
(45) Date de publication et mention de la délivrance du brevet: **27.08.1997**
(21) Numéro de dépôt: 92401814.6
(22) Date de dépôt: 26.06.1992
(51) Int. Cl.: C08L 61/06, C08J 9/14, C08G 8/28, C08K 5/21, C08K 5/05, C08K 5/06

(54) **Résines formo-phénoliques souples, et leur application à l'obtention de mousses souples**
Weiche Phenolformaldehydharze und ihre Anwendung für Weichschäume
Soft phenolformaldehyde resins and their use for soft foams

(30) Priorité: 01.07.1991 FR 9108152
(43) Date de publication de la demande: 13.01.1993
(73) Titulaire: CRAY VALLEY SA, 92800 Puteaux (FR)
(72) Inventeur: Bedel, Didier, F-60610 La Croix St Ouen (FR); Crozat, Chantal, F-02840 Athies-sous-Laon (FR); Yahiaoui, Kamel, F-60570 Andeville (FR)
(74) Mandataire: Jolly, Jean-Pierre

(56) Documents cités:
- EP-A- 341 569
- EP-A- 0 211 799
- WO-A-86/07370
- GB-A- 2 078 228
- US-A- 4 150 194
- Römmp Chemie Lexikon, 9. Ed., "Glykole".

## Description

La présente invention se rapporte à des résines et des mousses formo-phénoliques présentant un caractère de souplesse.

Les résines formo-phénoliques sont des résines synthétiques bien connues depuis longtemps qui présentent comme inconvénient notable dans de nombreuses applications un manque de souplesse à peu près total. Ceci se traduit notamment par un allongement à la rupture très faible et, dans le cas de mousses obtenues à partir de telles résines, par une friabilité importante. Ce dernier caractère se révèle particulièrement dans de nombreuses applications parmi lesquelles des applications minières : lorsque des pressions importantes s'exercent, telles que des mouvements de terrains ou éboulements, les mousses formo-phénoliques utilisées pour la stabilisation de voies et de tailles dans les mines à charbon résistent mal aux contraintes et se fissurent voire même s'écrasent sans amortir les chocs.

Il existe donc un besoin pressant dans ces applications pour la mise au point de résines et de mousses formo-phénoliques présentant un caractère de souplesse, ceci constituant le problème à résoudre par la présente invention. Par ailleurs, il est facile d'imaginer qu'un certain nombre d'applications jusqu'ici fermées aux résines formo-phénoliques malgré leurs autres qualités bien connues, telles que la résistance au feu, pourraient s'ouvrir à elles si un certain caractère de souplesse était garanti.

La demande de brevet publiée WO 86/07370 décrit, dans le but de réduire la tendance de la résine à charbonner au cours de sa combustion et d'augmenter sa conductivité thermique sans nuire à sa friabilité, sa résistance à la compression et sa faible inflammabilité, un procédé de préparation d'une mousse phénol-aldéhyde à cellules fermées comprenant (a) le strippage d'une résine phénol-aldéhyde de type résol en présence d'une quantité d'un solvant approprié capable de modifier sa viscosité jusqu'à une teneur en eau ne dépassant pas 7 % en poids par rapport à la résine et jusqu'à une viscosité adaptée, de préférence inférieure à 3,5 Pa.S, puis (b) l'addition de 10 à 20 % en poids par rapport à la résine d'un polyglycol de dihydroxyéther non ramifié ayant un poids moléculaire ne dépassant pas 300. Malheureusement ce procédé ne permet pas d'atteindre des mousses formo-phénoliques présentant un caractère de souplesse.

Le document EP-A-211.799 décrit un liant pour sable de fonderie comprenant :
- une solution aqueuse de résine formo-phénolique fortement alcaline réticulable par un formiate d'alkyle,
- de 2 à 10 % en poids, par rapport à ladite solution, de glycérine, et
- le cas échéant, de 1 à 10 % en poids, par rapport à ladite solution, d'un polyéthylène glycol de poids moléculaire compris entre 200 et 600, avec dans ce cas la condition que la somme de la glycérine et du polyéthylène glycol ne dépasse pas 15 % en poids de la solution de résine.

Ce liant est incorporé à raison de 1,4 partie pour 100 parties de sable.

US-A-4 150 194 décrit une composition thermodurcissable de résine, destinée à l'imprégnation de papier, qui comprend une résine phénol-aldéhyde de type résol, préparée en présence d'au moins un diol choisi dans le groupe constitué par le diéthylène glycol, le dipropylène glycol, le triéthylène glycol et le tripropylène glycol.

Pour résoudre les difficultés exposées précédemment, la présente invention est basée sur la découverte surprenante qu'un caractère de souplesse peut être atteint à l'aide d'une composition associant une résine phénol-aldéhyde thermodurcissable, au moins un glycol, au moins un oligomère ou polymère de température de transition vitreuse peu élevée, miscible avec la résine phénol-aldéhyde et avec le glycol et comportant une fonction terminale susceptible de réagir avec la résine phénol-aldéhyde, et le cas échéant au moins une espèce capable de capter l'aldéhyde résiduel.

Plus précisément un premier objet de la présente invention concerne une composition de résine phénol-aldéhyde souple comprenant, pour 100 parties en poids de composition :
- de 65 à 80 parties en poids d'une résine phénol-aldéhyde de type résol,
- de 10 à 25 parties en poids d'un composé (A) choisi dans le groupe constitué par l'éthylène glycol, le propylène glycol, le diéthylène glycol, le dipropylène glycol, leurs homologues supérieurs et leurs mélanges en toutes proportions, et
- de 5 à 12 parties en poids d'au moins un polymère de la famille des polyalkylène glycols de poids moléculaire moyen en nombre compris entre 150 et 1500, ce polyalkylène glycol ayant une température de transition vitreuse ne dépassant pas 40°C, étant miscible avec la résine phénol-aldéhyde et avec le composé (A) et comportant au moins une fonction terminale susceptible de réagir avec la résine phénol-aldéhyde.

La résine de type résol présente dans la composition selon l'invention est une résine bien connue, obtenue de préférence par condensation, en milieu basique, d'un aldéhyde tel que le furfural ou le formol et d'un phénol dans un rapport molaire aldéhyde/phénol généralement compris entre 0,8 et 1,5 environ. Comme polymère miscible, on utilise au moins un polyalkylène glycol tel que le polyéthylène glycol, le polypropylène glycol, leurs homologues supérieurs et leurs mélanges en toutes proportions. Le poids moléculaire moyen en nombre de ces polyalkylène glycols est compris entre 150 et 1500 environ et, de préférence, entre 700 et 1 500 environ.

La composition de résine souple selon l'invention peut en outre comprendre au moins une espèce capable de capter l'aldéhyde résiduel, tel que par exemple l'urée. Une telle espèce sera généralement présente en une proportion allant jusqu'à 3 % environ en poids par rapport à la somme des autres constituants de la composition.

Les compositions de résines souples selon l'invention possèdent typiquement des viscosités comprises entre 3 et 100 poises environ à 20°C (0.3 - 10 Pa·s). Leur taux d'extrait sec, déterminé selon la norme ISO 8618, est généralement compris entre 65 et 85 % environ. Leur taux d'aldéhyde résiduel libre est généralement inférieur à 1 %.

Grâce à la condition de miscibilité du polymère de température de transition vitreuse peu élevée avec les autres constituants de la composition de résine souple selon l'invention, celle-ci peut être préparée par simple mélange, dans un ordre d'introduction indifférent, de ses trois constituants principaux et, le cas échéant, du capteur d'aldéhyde résiduel.

Les compositions de résine selon l'invention possèdent des caractéristiques mécaniques, et notamment un allongement à la rupture, très supérieures à celles des résines formo-phénoliques connues, c'est-à-dire ne comprenant pas en combinaison le composé (A) et un polyalkylène glycol. Elles se caractérisent en particulier par un allongement à la rupture, déterminé selon la norme ISO R 527, qui n'est généralement pas inférieur à 20 % et qui peut atteindre jusqu'à 100 %.

Un second objet de la présente invention concerne l'application d'une composition de résine souple telle que décrite précédemment à l'obtention d'une composition de mousse phénol-aldéhyde souple comprenant une résine phénol-aldéhyde, au moins un agent tensio-actif, au moins un agent porogène et au moins un catalyseur acide, caractérisée en ce que, comme résine phénol-aldéhyde, on utilise une composition comprenant, pour 100 parties en poids :
- de 65 à 90 parties en poids d'une résine phénol-aldéhyde de type résol,
- de 5 à 25 parties en poids d'un composé (A) choisi dans le groupe constitué par l'éthylène glycol, le propylène glycol, le diéthylène glycol, le dipropylène glycol, leurs homologues supérieurs et leurs mélanges en toutes proportions.
- de 3 à 12 parties en poids environ d'au moins un polymère choisi dans la famille des polyalkylène glycols de poids moléculaire moyen en nombre compris entre 150 et 1500, ce polyalkylène glycol ayant une température de transition vitreuse ne dépassant pas 40°C, étant miscible avec la résine phénol-aldéhyde et avec le composé (A) et comportant au moins une fonction terminale susceptible de réagir avec le résine phénol-aldéhyde.

Dans une telle composition de mousse souple on utilise de préférence, pour 100 parties en poids, de 65 à 80 parties de résine de type résol, de 10 à 25 parties de composé (A) et de 5 à 12 parties de polymère de température de transition vitreuse ne dépassant pas 40°C.

Les ingrédients de la résine phénol-aldéhyde particulière utilisée dans la composition de mousse souple selon l'invention ont été décrits en détail précédemment. Les autres constituants de la composition de mousse souple selon l'invention sont les constituants typiques des mousses phénol-aldéhyde, notamment :
- le catalyseur acide est généralement un acide minéral fort tel que sulfurique, chlorhydrique, phosphorique ou nitrique, ou leurs solutions aqueuses concentrées, ou bien encore un acide organique fort tel que benzènesulfonique, toluénesulfonique, phénolsulfonique, paratoluènesulfonique, xylènesulfonique, naphtalènesulfonique, ou leurs mélanges en toutes proportions.
- l'agent tensio-actif est généralement un agent non-ionique tel que le produit de condensation d'oxydes d'alkylène et le cas échéant d'au moins un composé choisi parmi les alkylphénols possédant de 8 à 12 atomes de carbone dans le groupe alkyle, les acides gras possédant au moins 12 atomes de carbone et les alkylsiloxanes. Comme exemples de tels agents non-ioniques, on peut citer notamment des copolymères à blocs d'oxyde d'éthylène et d'oxydes de propylène, de l'huile de ricin éthoxylée et le cas échéant hydrogénée, et des produits de condensation d'huile de lin ou de ricin et d'oxyde d'éthylène. Des agents tensio-actifs possédant une partie fluorocarbonée hydrophobe peuvent également être utilisés.
- l'agent porogène est généralement un liquide possédant une température d'ébullition à pression atmosphérique de - 50° à + 100°C environ, de préférence 0° à 50°C environ. Les liquides préférés sont des hydrocarbures et des hydrocarbures halogénés tels que le n-pentane, le cyclo-pentane, le 2-méthylbutane, le trichlorofluoro-éthane, le trichlorofluorométhane, le trichlorotrifluoro-éthane CF Cl₂ - CCl F₂ et le tétrafluorodichloro-éthane CF₃ - CCl₂ F. On peut également utiliser le diéthylether ou l'isopropyléther.

La composition de mousse souple selon l'invention comprend généralement, pour 100 parties en poids de résine phénol-aldéhyde :
- de 0,5 à 3 parties en poids d'agent tensio-actif,
- de 0,5 à 15 parties en poids d'agent porogène et,
- de 10 à 25 parties en poids de catalyseur acide.

La composition de mousse souple selon l'invention peut également comprendre, pour 100 parties en poids de résine phénol-aldéhyde, jusqu'à 15 parties en poids d'un épaississant tel que la farine de bois ou le kieselguhr.

La composition de mousse souple selon l'invention peut être obtenue en préparant d'abord un mélange de ses quatre constituants principaux puis en versant ce mélange dans un moule et en laissant la réticulation s'opérer. Généralement le moussage commence dès l'addition du catalyseur acide. Les durées, températures et autres conditions réactionnelles sont bien connues de l'homme de l'art.

Dans le cas où la composition de mousse souple selon l'invention est destinée à la stabilisation de voies et de tailles dans les mines d'extraction de charbon ou de métaux, elle est préparée "in situ" par injection en taille, ou dans la voie, du mélange de ses quatre constituants principaux.

Les compositions de mousse souple selon l'invention possèdent un comportement particulièrement avantageux : contrairement aux mousses connues de l'art antérieur, dont la résine phénol-aldéhyde n'est pas associée à la combinaison d'un glycol et d'un oligomère ou polymère tel que précédemment défini, elles sont capables de subir une pression de plusieurs MPa sans altération de leur structure cellulaire et de reprendre leur volume initial après un certain laps de temps. Ce comportement est différent de celui des mousses formo-phénoliques classiques qui s'écrasent avec destruction de leur structure cellulaire.

Par ailleurs les compositions de mousses souples selon l'invention présentent une bonne aptitude au vieillissement. Contrairement aux mousses formo-phénoliques classiques dont le caractère de friabilité et la résistance à la compression augmentent de façon notable au cours du temps, la souplesse des mousses selon l'invention n'évolue pas de façon sensible en fonction du temps.

Compte tenu de ces différentes qualités, les compositions de mousse souple selon l'invention trouvent des emplois avantageux dans le soutènement de galeries de mines par projection, ainsi que pour la consolidation de roches dans le domaine des travaux publics - notamment en tunnels - et comme matériaux de calage dans l'industrie de l'emballage.

Les exemples ci-après ont pour but d'illustrer l'invention sans intention limitative.

### EXEMPLE 1

2 425 g de phénol, 774 g de formol en solution aqueuse à 50 %, 10,3 g de soude en solution aqueuse à 50 % sont introduits à 50°C dans un réacteur muni d'un agitateur mécanique et d'une colonne réfrigérante. La température est portée à 100°C et la réaction se poursuit pendant 60 minutes. La température est alors ramenée à 50°C, la solution neutralisée par 0,25 mole d'acide lactique et concentrée sous vide jusqu'à une viscosité de 180 poises (18 Pa·s). Au résol ainsi obtenu on additionne 413 g de polypropylène glycol de masse moléculaire moyenne en nombre égale à 1000, 67 g d'urée et 900 g de diéthylène glycol. On obtient alors une composition de résine formo-phénolique réticulable présentant un caractère de souplesse qui sera mis en évidence dans les exemples ci-après.

### EXEMPLE 2

A partir de la résine formo-phénolique souple obtenue à l'exemple 1, on prépare une mousse en versant à 20°C dans un moule ouvert une composition comprenant:
- 100 parties en poids de la résine de l'exemple 1,
- 2 parties en poids d'un émulsifiant non ionique consituté d'un condensat d'oxyde d'éthylène et d'huile de lin, commercialisé sous la dénomination CEMUSOL B,
- 12 parties en poids d'un catalyseur commercialisé par la société CRAY VALLEY SA sous la dénomination C 2965 et comprenant un mélange de 27,8 % en poids d'acide paratoluènesulfonique à 65 %, de 64,8 % en poids d'acide phénolsulfonique à 70 %, de 3,7 % en poids de résorcinol et de 3,7 % en poids d'eau.
- 10 parties en poids d'un agent porogène constitué de trichlorotrifluoro-éthane CF Cl₂ - CCl F₂ commercialisé sous la dénomination FORANE 113.

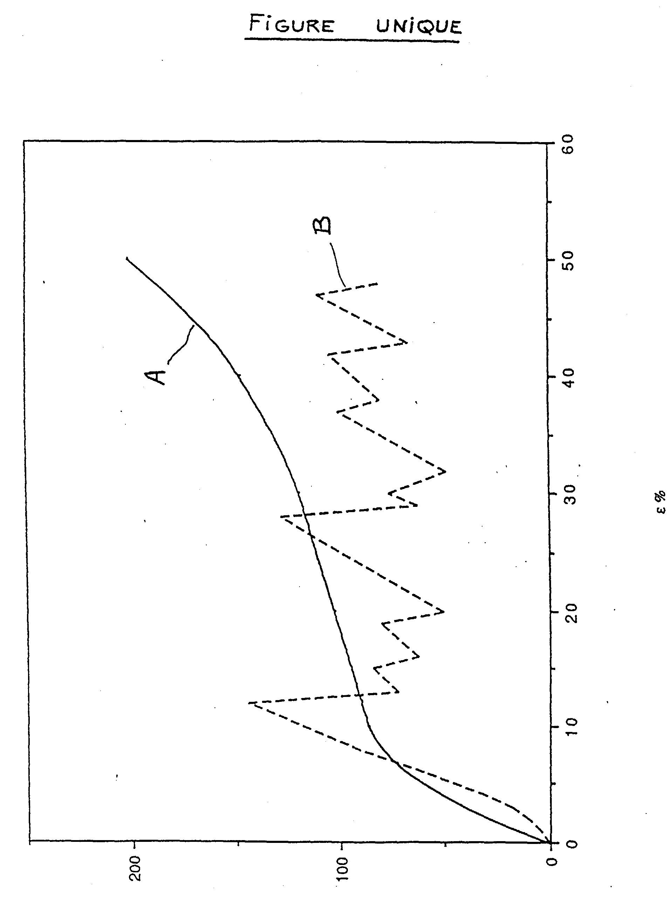

Le moussage, réaction exothermique, est achevé après 20 minutes puis on laisse refroidir jusqu'à la température ambiante. La mousse ainsi obtenue est soumise à un essai de compression conformément à la norme ISO 844 dans lequel on suit l'évolution de la contrainte à la compression (exprimée en KPa) en fonction du taux de compression ε (exprimé en %). Cette évolution se traduit par la courbe A sur la figure en annexe. L'échantillon de mousse sousmis à l'essai reprend son volume initial en quelques minutes.

### EXEMPLE 3 (comparatif)

On reproduit le mode opératoire de l'exemple 1 pour préparer une résine à partir de :
- 2 425 g de phénol,
- 1 161 g de formol,
- 80 g d'urée et
- 319 g d'éthylène glycol.

A partir de cette résine on prépare une mousse en suivant le mode opératoire de l'exemple 2. La mousse obtenue est alors soumise à l'essai de compression selon la norme ISO 844, dont les résultats sont représentés par la courbe B de la figure en annexe. Cette courbe est caractéristique du comportement d'une mousse friable, chaque pic correspondant à la résistance d'une couche de cellules, suivie de l'effondrement de celles-ci. Il n'y a bien sûr pas reprise du volume initial.

### EXEMPLE 4

La résine formo-phénolique (100 parties en poids) préparée à l'exemple 1 est mélangée à un catalyseur de réticulation (5 parties en poids) constitué d'un mélange de:
- 81,5 % en poids d'acide paratoluènesulfonique à 65 %,
- 11,7 % en poids d'eau, et
- 6,8 % en poids d'acide phosphorique à 75 %.

La résine ainsi catalysée subit une première cuisson à 50°C pendant 1,5 heure, suivie d'une post-cuisson à 80°C pendant 17 heures.

Le taux de déformation à la rupture, mesuré sur cette résine réticulée selon la norme ISO R 527, est égal à 84 %.

### EXEMPLE 5 (comparatif)

La résine formo-phénolique préparée à l'exemple 3 est catalysée et réticulée selon le mode opératoire de l'exemple 4. Le taux de déformation à la rupture, mesuré sur cette résine réticulée selon la norme ISO R 527, est égal à 2 %.

### EXEMPLE 6

A partir de la résine formo-phénolique souple de l'exemple 1 on prépare à 20°C une composition de mousse comprenant:
- 100 parties en poids de résine,
- 1,4 partie en poids de l'agent porogène FORANE 113,
- partie en poids de l'émulsifiant non-ionique CEMUSOL B, et
- 20,5 parties en poids du catalyseur C 2965.

Après 20 minutes le moussage est terminé et on laisse le mélange refroidir. La mousse obtenue, d'une densité de 0,25 g/cm³, est caractérisée dans l'essai de compression selon la norme ISO 844 par les valeurs suivantes:

| | |
|---|---|
| contrainte à 10 % de compression | 86 KPa |
| contrainte à 90 % de compression | 33 000 KPa |

L'échantillon soumis à la mesure reprend son volume initial en quelques minutes.

### EXEMPLE 7

On reproduit le mode opératoire de l'exemple 1 en remplaçant le polypropylène glycol par une quantité identique de polyéthylène glycol. A partir de la résine ainsi obtenue, qui présente un caractère de souplesse comme celle de l'exemple 1, on prépare une mousse en suivant le mode opératoire de l'exemple 6. La mousse obtenue, d'une densité de 0,28 g/cm³, est caractérisée dans l'essai de compression selon la norme ISO 844 par les valeurs suivantes:

| | |
|---|---|
| contrainte à 10 % de compression | 5,6 KPa |
| contrainte à 90 % de compression | 7 000 KPa |

L'échantillon soumis à la mesure reprend son volume initial en quelques minutes.

### EXEMPLE 8

2 425 g de phénol, 774 g de formol en solution aqueuse à 50 % et 10,3 g de soude en solution aqueuse à 50 % sont introduits dans un réacteur muni d'un agitateur mécanique et d'une colonne réfrigérante. La température est portée à 100°C et la réaction se poursuit pendant 45 minutes. La température est alors ramenée à 50°C, la solution neutralisée par 0,25 mole d'acide lactique et concentrée sous vide jusqu'à une viscosité de 50 poises (5 Pa·s). Au résol ainsi obtenu on additionne 413 g de polypropylène glycol de masse moléculaire moyenne en nombre égale à 1000, 67 g d'urée et 900 g de diéthylène glycol.

A partir de la résine souple ainsi obtenue on prépare à 20°C une composition de mousse formo-phénolique comprenant:
- 100 parties en poids de résine formo-phénolique,
- 1,4 partie en poids de l'agent porogène FORANE 113,
- 1 partie en poids d'émulsifiant non-ionique CEMUSOL B et
- 15,4 parties en poids de catalyseur C 2965.

La mousse obtenue, d'une densité de 0,18 g/cm³, est caractérisée dans l'essai de compression selon la norme ISO 844 par les valeurs suivantes :

| | |
|---|---|
| contrainte à 10 % de compression | 20,2 KPa |
| contrainte à 90 % de compression | 2 000 KPa |

L'échantillon soumis à la mesure reprend son volume initial en quelques minutes.

## Revendications

1. Composition de résine phénol-aldéhyde souple comprenant, pour 100 parties en poids de composition :
- de 65 à 80 parties en poids d'une résine phénol-aldéhyde de type résol,
- de 10 à 25 parties en poids d'un composé (A) choisi dans le groupe constitué par l'éthylène glycol, le propylène glycol, le diéthylène glycol, le dipropylène glycol, leurs homologues supérieurs et leurs mélanges,
- de 5 à 12 parties en poids d'au moins un polymère d'alkylène glycol de poids moléculaire moyen en nombre compris entre 150 et 1 500, ce polyalkylène glycol ayant une température de transition vitreuse ne dépassant pas 40°C, étant miscible avec la résine phénol-aldéhyde et avec le composé (A) et comportant au moins une fonction terminale susceptible de réagir avec la résine phénol-aldéhyde.

2. Composition de résine selon la revendication 1, caractérisée en ce que son allongement à la rupture selon la norme ISO R 527 est compris entre 20 % et 100 %.

3. Composition de mousse phénol-aldéhyde souple comprenant une résine phénol-aldéhyde, au moins un agent tensio-actif, au moins un agent porogène et au moins un catalyseur acide, caractérisée en ce que, comme résine phénol-aldéhyde, on utilise une composition comprenant, pour 100 parties en poids :
- de 65 à 90 parties en poids d'une résine phénol-aldéhyde de type résol,
- de 5 à 25 parties en poids d'un composé (A) choisi dans le groupe constitué par l'éthylène glycol, le propylène glycol, le diéthylène glycol, le dipropylène glycol, leurs homologues supérieurs et leurs mélanges,
- de 3 à 12 parties en poids d'au moins un polymère d'alkylène glycol de poids moléculaire moyen en nombre compris entre 150 et 1 500, ce polyalkylène glycol ayant une température de transition vitreuse ne dépassant pas 40°C, étant miscible avec la résine phénol-aldéhyde et avec le composé (A) et comportant au moins une fonction terminale susceptible de réagir avec la résine phénol-aldéhyde.

4. Composition de mousse phénol-aldéhyde souple selon la revendication 3, caractérisée en ce qu'elle comprend, pour 100 parties en poids de résine phénol-aldéhyde :
- de 0,5 à 3 parties en poids d'un agent tensio-actif,
- de 0,5 0 15 parties en poids d'un agent porogène, et
- de 10 à 25 parties en poids d'un catalyseur acide.

5. Composition de mousse phénol-aldéhyde souple selon l'une des revendications 3 et 4, caractérisée en ce qu'elle comprend en outre, pour 100 parties en poids de résine phénol-aldéhyde, jusqu'à 15 parties en poids d'un épaississant.

## Patentansprüche

1. Flexible Phenol-Aldehyd-Harz-Zusammensetzung, enthaltend pro 100 Gewichtsteile Zusammensetzung:
- 65 bis 80 Gewichtsteile eines Phenol-Aldehyd-Harzes vom Resoltyp,
- 10 bis 25 Gewichtsteile einer Verbindung (A), ausgewählt aus der Gruppe bestehend aus Ethylenglykol, Propylenglykol, Diethylenglykol, Dipropylenglykol, deren höheren Homologen und deren Gemischen,
- 5 bis 12 Gewichtsteile mindestens eines Alkylenglykolpolymers mit einem zahlenmittleren Molekulargewicht von 150 bis 1.500, wobei das Polyalkylenglykol eine Glasübergangstemperatur nicht über 40°C aufweist, mit dem Phenol-Aldehyd-Harz und mit der Verbindung (A) mischbar ist und mindestens eine Endgruppe, die mit dem Phenol-Aldehyd-Harz reagieren kann, enthält.

2. Harzzusammensetzung nach Anspruch 1, dadurch gekennzeichnet, daß ihre Bruchdehnung gemäß ISO-Standard R 527 zwischen 20% und 100% liegt.

3. Phenol-Aldehyd-Weichschaumstoff-Zusammensetzung, enthaltend ein Phenol-Aldehyd-Harz, mindestens ein Tensid, mindestens ein porenbildendes Mittel und mindestens einen sauren Katalysator, dadurch gekennzeichnet, daß als Phenol-Aldehyd-Harz eine Zusammensetzung verwendet wird, die pro 100 Gewichtsteile enthält:
- 65 bis 90 Gewichtsteile eines Phenol-Aldehyd-Harzes vom Resoltyp,
- 5 bis 25 Gewichtsteile einer Verbindung (A), ausgewählt aus der Gruppe bestehend aus Ethylenglykol, Propylenglykol, Diethylenglykol, Dipropylenglykol, deren höheren Homologen und deren Gemischen,
- 3 bis 12 Gewichtsteile mindestens eines Alkylenglykolpolymers mit einem zahlenmittleren Molekulargewicht von 150 bis 1.500, wobei das Polyalkylenglykol eine Glasübergangstemperatur nicht über 40°C aufweist, mit dem Phenol-Aldehyd-Harz und mit der Verbindung (A) mischbar ist und mindestens eine Endgruppe enthält, die mit dem Phenol-Aldehyd-Harz reagieren kann.

4. Phenol-Aldehyd-Weichschaumstoff-Zusammensetzung nach Anspruch 3, dadurch gekennzeichnet, daß sie pro 100 Gewichtsteile Phenol-Aldehyd-Harz enthält:
- 0.5 bis 3 Gewichtsteile Tensid,
- 0.5 bis 15 Gewichtsteile porenbildendes Mittel und
- 10 bis 25 Gewichtsteile sauren Katalysator.

5. Phenol-Aldehyd-Weichschaumstoff-Zusammensetzung nach einem der Ansprüche 3 und 4, dadurch gekennzeichnet, daß sie ferner pro 100 Gewichtsteile Phenol-Aldehyd-Harz bis zu 15 Gewichtsteile eines Verdickers enthält.

## Claims

1. Flexible phenol-aldehyde resin composition comprising, per 100 parts by weight of composition:
- from 65 to 80 parts by weight of a resol type phenol-aldehyde resin,
- from 10 to 25 parts by weight of a compound (A) chosen from the group consisting of ethylene glycol, propylene glycol, diethylene glycol, dipropylene glycol, the higher homologues thereof and the mixtures thereof,
- from 5 to 12 parts by weight of at least one alkylene glycol polymer of number average molecular weight between 150 and 1,500, this polyalkylene glycol having a glass-transition temperature not exceeding 40°C, being miscible with the phenol-aldehyde resin and with the compound (A) and containing at least one terminal function capable of reacting with the phenol-aldehyde resin.

2. Resin composition according to Claim 1, characterised in that its elongation at break according to ISO Standard R 527 is between 20% and 100%.

3. Flexible phenol-aldehyde foam composition comprising a phenol-aldehyde resin, at least one surfactant, at least one pore-forming agent and at least one acid catalyst, characterised in that a composition comprising, per 100 parts by weight:
- from 65 to 90 parts by weight of a resol type phenol-aldehyde resin,
- from 5 to 25 parts by weight of a compound (A) chosen from the group consisting of ethylene glycol, propylene glycol, diethylene glycol, dipropylene glycol, the higher homologues thereof and the mixtures thereof,
- from 3 to 12 parts by weight of at least one alkylene glycol polymer of number average molecular weight between 150 and 1,500, this polyalkylene glycol having a glass-transition temperature not exceeding 40°C, being miscible with the phenol-aldehyde resin and with the compound (A) and containing at least one terminal function capable of reacting with the phenol-aldehyde resin,
is used as a phenol-aldehyde resin.

4. Flexible phenol-aldehyde foam composition according to Claim 3, characterised in that it comprises, per 100 parts by weight of phenol-aldehyde resin:
- from 0.5 to 3 parts by weight of surfactant,
- from 0.5 to 15 parts by weight of pore-forming agent, and
- from 10 to 25 parts by weight of acid catalyst.

5. Flexible phenol-aldehyde foam composition according to one of Claims 3 and 4, characterised in that it comprises, in addition, per 100 parts by weight of phenol-aldehyde resin, up to 15 parts by weight of a thickener.
